# EUROPÄISCHE PATENTSCHRIFT

(11) **EP 1 636 657 B1**
(45) Veröffentlichungstag und Bekanntmachung des Hinweises auf die Patenterteilung: **24.08.2011**
(21) Anmeldenummer: 04740139.3
(22) Anmeldetag: 22.06.2004
(51) Int. Cl.: G05B 19/418

(54) **FELDBUSVERTEILEREINHEIT**
FIELDBUS DISTRIBUTION UNIT
UNITE DE DISTRIBUTION DE BUS DE TERRAIN

(30) Priorität: 26.06.2003 DE 10328906
(43) Veröffentlichungstag der Anmeldung: 22.03.2006
(73) Patentinhaber: Endress + Hauser Process Solutions AG, 4153 Reinach BL (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2004/006705
(87) Internationale Veröffentlichungsnummer: WO 2005/001699

(56) Entgegenhaltungen:
- EP-A- 0 994 350
- EP-A- 1 265 118
- EP-A- 1 404 062
- GB-A- 2 358 487
- US-A- 4 949 299
- US-A- 6 035 247
- US-B1- 6 192 281
- US-B1- 6 496 892
- FISHER-ROSEMOUNT SYSTEMS, INC.: "Cost and Analysis Cable Study using Foundation Fieldbus Instruments" WHITEPAPER, [Online] Januar 2002 (2002-01), XP002310659 Gefunden im Internet: URL:http://www.easydeltav.com/pd/WP_CableS tudy.pdf> [gefunden am 2004-12-13]

## Beschreibung

Die Erfindung betrifft eine Feldbusverteilereinheit gemäß dem Oberbegriff des Anspruchs 1.

In der Prozessautomatisierungstechnik werden vielfach Feldgeräte eingesetzt, die über einen Feldbus mit Steuereinheiten verbunden sind.

Feldgeräte dienen allgemein zur Erfassung und/oder Beeinflussung von Prozessvariablen.

Beispiele für derartige Feldgeräte sind Füllstandsmesser, Massedurchflussmesser, Druck- u. Temperaturmessgeräte, pH-Redox-Messgeräte, Leitfähigkeitsmessgeräte etc., die als Messgeräte die entsprechenden Prozessvariablen Füllstand, Durchfluss, Druck, Temperatur, pH-Wert bzw. Leitfähigkeit erfassen. Eine Vielzahl derartiger Feldgeräte wird von der Firma Endress + Hauser® hergestellt und vertrieben.

Die übergeordneten Einheiten dienen zur Prozessvisualisierung, Prozessüberwachung, Prozesssteuerung sowie zur Bedienung der an den Feldbus angeschlossenen Feldgeräte.

Beispiele für Feldbussysteme sind Profibus®, Foundation® Fieldbus, etc..

Über den Feldbus können nicht nur Messwerte sondern eine Vielzahl von Informationen zwischen dem Feldgerät und einer übergeordneten Einheit ausgetauscht werden. So können z. B. gerätespezifische Informationen im Feldgerät abgespeichert werden und bei Bedarf abgerufen werden. Bei den gerätespezifischen Informationen kann es sich um Standortinformationen, Inbetriebnahmeinformationen, Serviceinformationen, etc.. Eine Speicherung von gerätespezifischen Informationen im Feldgerät ist jedoch nur möglich, wenn das Feldgerät am Feldbus installiert ist und betriebsbereit ist. Die Angabe dieser Informationen kann einerseits selbst am Gerät erfolgen mit Hilfe eines Displays und einer Tastatur, oder von einer übergeordneten Einheit.

In der Regel fallen gerätespezifische Informationen (Standardinformationen und Inbetriebinformationen) bei der Installation des entsprechenden Feldgerätes an. In diesem Fall muss ein Techniker diese Informationen aufwendig über die Tastatur am Feldgerät eingeben oder z. B. per Funk an entsprechendes Bedienpersonal bei der übergeordneten Einheit (Warte) weitergeben. In der Regel sind die Geräte bei der Installation noch nicht betriebsbereit, d. h. sie müssen erst initialisiert werden. Dies bedeutet aber, das die entsprechenden Informationen erst verzögert im Feldgerät abgespeichert werden können. Aufgrund der Verzögerung kann nicht ausgeschlossen werden, dass fehlerhafte Informationen im Feldgerät abgespeichert werden.

Ebenfalls problematisch ist das Abspeichern von Serviceinformationen, wenn das entsprechende Feldgerät defekt ist.

Weiterhin gehen bei einem Geräteaustausch alle im Feldgerät abgespeicherten Informationen verloren.

Aus der US-A 4,949, 299 ist ein industrielles Kommunikationsnetzwerk in der Fertigungstechnik bekannt geworden. Das Netzwerk besteht aus einer programmierbaren Steuerung, die über eine Schnittstelle mit mehreren Sensoren/Aktoren verbunden ist. Das Netzwerk enthält weiterhin eine Antenne, die auf Anfrage der Steuerung Information von RF/ID Etiketten sammelt, die an Werkstücken befestigt sind, die sich in der Fertigungslinie befinden.

Aufgabe der Erfindung ist es deshalb eine Feldbusverteilereinheit zu schaffen, die es erlaubt gerätespezifische Informationen bei der Installation und beim Austausch von Feldgeräten zuverlässig zur Verfügung zu stellen.

Gelöst wird diese Aufgabe durch die im Anspruch 1 angegebene Feldbusverteilereinheit.

Weiterentwicklungen der Erfindung sind in den Unteransprüchen angegeben.

Die wesentliche Idee der Erfindung besteht darin in einer Feldbusverteilereinheit einen Mikrocontroller vorzusehen, der zur Übertagung von gerätespezifische Geräteinformationen dient.

Um gerätespezifische Informationen einfach erfassen zu können, ist der Mikrocontroller mit einem Lesemodul für Chip-Etiketten verbunden. Derartige Chip-Etiketten sind weit verbreitet und dienen zur einfachen und kostengünstigen Speicherung von Informationen.

In einfacher Weise handelt es sich bei den Chip-Etiketten um RFID-Etiketten.

Diese Chip-Etiketten sind an den Verbindungskabeln zu den Feldgeräten vorgesehen. In diesem Falle stehen z. B. Standortinformationen auch bei einem Austausch eines Feldgerätes weiter zur Verfügung.

Bei den gerätespezifischen Informationen kann es sich um Standortinformationen, Bestellcodes, Gerätehistorie, etc. handeln.

In einer Weiterentwicklung der Erfindung ist der Mikrocontroller mit einem GPS-Modul verbunden. Dadurch kann die Feldbusverteilereinheit schnell und zuverlässig lokalisiert werden und nicht alle an die Feldbusverteilereinheit angeschlossenen Feldgeräte benötigen eine eigenes GPS-Modul. In der Regel reicht die Standortinformation der Feldbusverteilereinheit aus, um auch die sich meist in unmittelbarer Nähe zu der Feldbusverteilereinheit befindlichen Feldgeräte eindeutig zu lokalisieren.

Nachfolgend ist die Erfindung anhand eines in der Zeichnung dargestellten Ausführungsbeispiels näher erläutert.

Es zeigen:
Fig. 1 Feldbussystem in schematischer Darstellung;
Fig. 2 erfindungsgemäße Feldbusverteilereinheit in schematischer Darstellung.

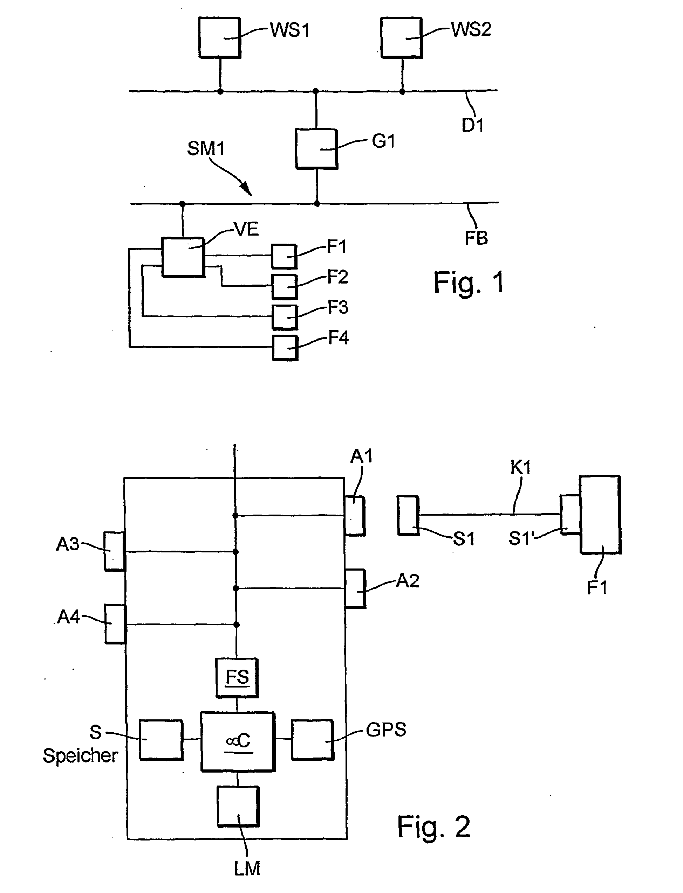

In Fig. 1 ist ein Feldbussystem näher dargestellt. An einem Datenbus D1 sind mehrere Rechnereinheiten, Workstations WS1, WS2 angeschlossen. Diese Rechnereinheiten dienen als Prozessleitsysteme. Über sie erfolgt die Prozessvisualisierung, Prozessüberwachung und das Engeenering sowie das Bedienen und Überwachen einzelner Feldgeräte. Der Datenbus D1 arbeitet z. B. nach dem Profibus FMS-Standard oder nach dem HSE (high speed ethernet)- Standard der Foundation® Fieldbus. Über einen Gateway G1, das auch als linking device oder als Segmentkoppler bezeichnet wird, ist der Datenbus D1 mit einem Feldbussegment SM1 verbunden, das im wesentlichen aus einer Feldbusverteilereinheit VE und mehreren Feldgeräten F1, F2, F3 und F4 besteht. Die Feldbusverteilereinheit VE ist über einen Feldbus FB mit dem Gateway G1 verbunden. Die Feldgeräte sind an die Feldbusverteilereinheit VE angeschlossen.

Über das Feldbussystem können die Feldgeräte F1, F2, F3 und F4 Daten mit den Rechnereinheiten WS1 bzw. WS2 austauschen.

In Fig. 2 ist die Feldbusverteilereinheit näher dargestellt. Die Feldbusverteilereinheit VE besteht aus einer herkömmlichen Feldbusverteilereinheit die zusätzlich noch einen Mikrocontroller µC, einen Speicher S, ein GPS-Modul GPS und ein Lesemodul LM aufweist. Der Mikrocontroller µC ist über eine Feldbusschnittstelle FS mit dem Feldbus FB verbunden. Weiterhin weist die Feldbusverteilereinheit VE 4 Anschlüsse A1, A2, A3, A4 auf, an die verschiedene Feldgeräte anschließbar sind. Beispielhaft dargestellt ist die Verbindung zum Feldgerät F1 mit einem Kabel K1. Das Kabel K1 weist an beiden Enden jeweils einen Stecker S1 bzw. S1' auf. Der Stecker S1 dient zur Verbindung mit dem Anschluss A1. Der Stecker S1' dient zur Verbindung mit dem Feldgerät.

Nachfolgend ist die Funktionsweise der Erfindung näher erläutert. Am Verbindungskabel K1 ist ein Chip-Etikett CE vorhanden, in dem gerätespezifische Informationen abgespeichert sind. Dieses Chip-Etikett CE kann unmittelbar am Verbindungskabel K1 bzw. am Stecker S1 vorgesehen sein. Bei den Chip-Etiketten CE handelt es sich um passive Einheiten ohne eigene Energieversorgung. Zum Auslesen der in dem Chip-Etikett CE gespeicherten Informationen dient das Lesemodul LM. Es überträgt auch die zum Auslesen notwendige Energie. Eine Informationsübertragung zwischen Chip-Etikett CE und dem Lesemodul LM ist nur möglich, wenn sich das Chip-Etikett CE innerhalb der Reichweite des Lesemoduls LM befindet. In der Regel ist das Chip-Etikett CE am vorderen Ende des Verbindungskabels K1 möglichst nah zum Lesemodul LM angeordnet. Werden in den übergeordneten Einheiten WS1 bzw. WS2 gerätespezifische Informationen benötigt, so wird eine entsprechende Anfrage an die Feldbusverteilereinheit VE gerichtet. Daraufhin ist das Lesemodul LM das entsprechende Chip-Etikett CE aus und überträgt die gewünschte Information.

In einer Weiterentwicklung der Erfindung ist der Mikrocontroller µC mit einem GPS-Modul verbunden, das standortspezifische Informationen zur Verfügung stellt. In der Regel sind die an eine Feldbusverteilereinheit VE angeschlossenen Feldgeräte an einer speziellen Prozesskomponente vorgesehen, so dass die Standinformation der Verteilereinheit auch für die Standortinformationen der angeschlossenen Feldgeräte ausreichend ist. Somit stehen zu allen Feldgeräten F1 - F4 aktuelle Standortinformationen zur Verfügung, ohne dass das betreffende Feldgerät selbst ein GPS-Modul aufweisen muss.

Weiterhin ist die Feldbusverteilereinheit mit einem Speicher S verbunden, in dem alle gerätespezifischen Informationen abgespeichert werden können. Ein wesentlicher Vorteil der Erfindung liegt darin, dass standortspezifische Informationen bei einem Austausch eines Feldgerätes trotzdem gerätespezifische Informationen wie z. B. Gerätehistorie nicht verloren gehen. Auch ist das Abspeichern der gerätespezifischen Informationen bei einem nicht betriebsbereiten Feldgerät möglich. Die gewünschte Information wird von einem Servicetechniker mit einem entsprechenden nicht näher dargestellten Schreibmodul bei der Installation des Feldgerätes in das entsprechende Chip-Etikett CE übertragen.

Weiterhin trägt die Erfindung auch zu einer erhöhten Prozesssicherheit bei, da in dem Chip-Etikett CE Informationen zum angeschlossenen Feldgerät abgespeichert werden können. Wird ein falsches Feldgerät an das Kabel K1 angeschlossen, so kann dies leicht durch den Vergleich der im Chip-Etikett CE abgespeicherten Daten und der vom Feldgerät zur Verfügung gestellten Daten erfolgen.

Die Erfindung ermöglicht in einfacher und kostengünstiger Weise gerätespezifische Daten abzurufen bzw. abzuspeichern.

## Patentansprüche

1. System mit einer Feldbusverteilereinheit (VE), einer übergeordneten Einheit (WS1, WS2) und mehreren Feldgeräten (F1, F2, F3, F4), wobei die Feldbusverteilereinheit und die übergeordnete Einheit (WS1, WS2) über einen Feldbus (FB) der Prozessautomatisierungstechnik miteinander verbunden sind, wobei die Feldbusverteilereinheit (VE) einen Mikrocontroller (µC) aufweist, der mit dem Feldbus (FB) verbunden ist und der zur Übertragung von gerätespezifischen Informationen der an die Verteilereinheit (VE) angeschlossenen Feldgeräte (F1, F2, F3, F4) dient, und wobei die Feldgeräte (F1, F2, F3, F4) mit der Feldbusverteilereinheit (VE) über Verbindungskabel (K1, K2, K3, K4) verbunden sind, **dadurch gekennzeichnet,**
**dass** in Chip-Etiketten (CE) gerätespezifische Informationen zu den Feldgeräten (F1, F2, F3, F4) abgespeichert sind und dass die Chip-Etiketten (CE) an den Verbindungskabeln (K1, K2, K3, K4) zu den Feldgeräten (F1, F2, F3, F4) vorgesehen sind, dass ein Lesemodul (LM) für die Chipetiketten (CE) vorgesehen ist,
**dass** der Mikrocontroller (µC) mit dem Lesemodul (LM) für die Chip-Etiketten (CE) verbunden ist,
**dass** der Feldbus (FB) zur Übertragung der gerätespezifischen Informationen der an die Verteilereinheit (VE) angeschlossenen Feldgeräte (F1, F2, F3, F4) dient, und
**dass** auf entsprechende Anfrage der übergeordneten Einheit (WS1, WS2) an die Feldbusverteilereinheit (VE) das Lesemodul (LM) das entsprechende, einem Feldgerät (F1, F2, F3, F4) zugeordnete Chip-Etikett (CE) ausliest und die gewünschte information an die übergeordnete Einheit (WS1, WS2) überträgt.

2. System nach Anspruch 1, dass die Chip-Etiketten (CE) RF/ID-Etiketten sind.

3. System nach einem der vorhergehenden Ansprüche, **dadurch gekennzeichnet, dass** sich bei den gerätespezifischen Informationen um Standortinformationen, Bestellcode, Gerätehistorie des entsprechenden Feldgerätes handelt.

4. System nach Anspruch 1 oder 2, **dadurch gekennzeichnet, dass** der Mikrocontroller (µC) mit einem GPS-Modul (GPS) verbunden ist, und

5. System nach einem der vorhergehenden Ansprüche, **dadurch gekennzeichnet, dass** der Feldbus (FB) nach einem der Feldbusstandards (HART®, Profibus®, Foundation® Fieldbus) arbeitet.

## Claims

1. System with a fieldbus distributor unit (VE), a higher-level unit (WS1, WS2) and several field devices (F1, F2, F3, F4), where the fieldbus distributor unit and the higher-level unit (WS1, WS2) are connected via a fieldbus (FB) used in process automation engineering, where the fieldbus distributor unit (VE) has a microcontroller (µC) which is connected to the fieldbus (FB) and is used to transmit device-specific information of the field devices (F1, F2, F3, F4) which are connected to the distributor unit (VE), and where the field devices (F1, F2, F3, F4) are connected to the field distributor unit (VE) via connection cables (K1, K2, K3, K4), **characterized in that** device-specific information on the field devices (F1, F2, F3, F4) is stored in chip tags (CE) and **in that** the chip tags (CE) are provided at the connection cables (K1, K2, K3, K4) to the field devices (F1, F2, F3, F4);
a reader module (LM) is provided for the chip tags (CE);
the microcontroller (µC) is connected to the reader module (LM) for the chip tags (CE);
the fieldbus (FB) is used to transmit the device-specific information of the field devices (F1, F2, F3, F4) which are connected to the distributor unit (VE); and
when an appropriate request is sent from the higher-level unit (WS1, WS2) to the fieldbus distributor unit (VE), the reader module (LM) reads the chip tag (CE) assigned to a specific field device (F1, F2, F3, F4) and transmits the desired information to the higher-level unit (WS1, WS2).

2. System as per Claim 1, **characterized in that** the chip tags (CE) are RF/ID tags.

3. System as per one of the previous claims, **characterized in that** the device-specific information comprises information on the location, the order code and the device history of the field device in question.

4. System as per Claim 1 or 2, **characterized in that** the microcontroller (µC) is connected to a GPS module (GPS).

5. System as per one of the previous claims, **characterized in that** the fieldbus (FB) operates according to one of the fieldbus standards (HART®, Profibus®, Foundation® Fieldbus).

## Revendications

1. Système avec une unité de distribution d'appareils de terrain (VE), une unité maître (WS1, WS2) et plusieurs appareils de terrain (F1, F2, F3, F4), l'unité de distribution d'appareils de terrain (VE) et l'unité maître (WS1, WS2) étant reliées entre elles par l'intermédiaire d'un bus de terrain (FB) de la technique d'automatisation des processus, l'unité de distribution d'appareils de terrain (VE) comportant un microcontrôleur (µC), qui est relié avec le bus de terrain (FB) et qui sert à la transmission d'informations spécifiques, relatives aux appareils de terrain (F1, F2, F3, F4) raccordés à l'unité de distribution d'appareils de terrain (VE), et les appareils de terrain (F1, F2, F3, F4) étant reliés avec l'unité de distribution d'appareils de terrain (VE) par l'intermédiaire d'un câble de liaison (K1, K2, K3, K4), **caractérisé en ce**
**que** les informations spécifiques, relatives aux appareils de terrain, sont enregistrées dans des étiquettes à puce (CE) et en ce que les étiquettes à puce (CE) sont prévues sur les câbles de liaison (K1, K2, K3, K4) relatifs aux appareils de terrain (F1, F2, F3, F4), qu'est prévu un module lecteur (LM) pour les étiquettes à puce (CE),
**que** le microcontrôleur (µC) est relié avec le module lecteur (LM) pour les étiquettes à puce (CE),
**que** le bus de terrain (FB) sert à la transmission des informations spécifiques des appareils de terrain (F1, F2, F3, F4) raccordés à l'unité de distribution d'appareils de terrain (VE), et
**que** sur demande appropriée de l'unité maître (WS1, WS2), adressée à l'unité de distribution d'appareils de terrain (VE), le module lecteur (LM) lit l'étiquette à puce (CE) appropriée, correspondant à un appareil de terrain (F1, F2, F3, F4), et transmet l'information souhaitée à l'unité maître (WS1, WS2).

2. Système selon la revendication 1, **caractérisé en que** les étiquettes à puce (CE) sont des étiquettes RFID.

3. Système selon l'une des revendications précédentes, **caractérisé en ce que**, concernant les informations spécifiques aux appareils, il s'agit d'informations d'emplacement, de codes de commande, d'historique de l'appareil de terrain correspondant.

4. Système selon la revendication 1 ou 2, **caractérisé en que** le microcontrôleur (µC) est relié avec un module GPS (GPS).

5. Système selon l'une des revendications précédentes, **caractérisé en ce que** le bus de terrain (FB) fonctionne d'après l'un des standards de bus de terrain (HART®, Profibus®, Foundation® Fieldbus).
